# EUROPEAN PATENT APPLICATION

(11) **EP 3 640 920 A1**
(43) Date of publication of application: **22.04.2020**
(21) Application number: 19203907.1
(22) Date of filing: 17.10.2019
(51) Int. Cl.: G08G 1/16, B60W 30/095, G05D 1/02, G06K 9/00, G06N 3/08

(54) **MACHINE LEARNING FOR DRIVERLESS DRIVING**

(30) Priority: 17.10.2018 US 201816163554
(71) Applicant: Sham, Wellen, Taipei City (TW)
(72) Inventor: Sham, Wellen, Taipei City (TW)
(74) Representative: Sadler, Peter Frederick

(57) **Abstract**

Methods for facilitating driverless driving may include receiving a first obstacle parameter of a first obstacle and a second obstacle parameter of a second obstacle detected by one or more sensors of a driving apparatus. The second obstacle parameter may be detected within a first predetermined period of time from detecting the first obstacle parameter. The method may further include receiving one or more maneuvering adjustments to the operation of the driving apparatus. The maneuvering adjustments may be made after detecting the first obstacle parameter but before an end of a second predetermined period of time from detecting the second obstacle parameter. The method may also include associating the maneuvering adjustments with the first obstacle parameter and the second obstacle parameter. The method may further include training a neural network based on the association of the maneuvering adjustments with the first obstacle parameter and the second obstacle parameter.

## Description

### BACKGROUND

The present disclosure relates to facilitating driverless driving through neural network.

Existing road or traffic condition detection techniques for driverless driving apparatuses may work well when the driverless driving apparatuses travel or operate on freeways, given the relatively steady flow of traffic on freeways. However, the existing techniques are often found to be insufficient when the road or traffic conditions are less predictable, such as the road or traffic conditions on local roads, or when there are multiple sudden or unexpected changes to the road or traffic conditions, which require an immediate decision to be made by the driverless driving apparatus to respond to the multiple changes so as to avoid any undesired consequences. Accordingly, the existing road or traffic condition detection techniques need to be improved so as to facilitate the application of driverless driving under all road or traffic conditions in everyday life.

### SUMMARY

Embodiments are provided for methods and systems implementing the methods for training or establishing a neural network for facilitating traveling or operation of a driving apparatus. The methods for facilitating traveling or operation of a driving apparatus may be implemented in one or more processors configured to execute programmed components. In some embodiments, a method for facilitating traveling or operation of a driving apparatus may include receiving a first obstacle parameter of a first obstacle. The first obstacle parameter may be detected by one or more sensors equipped on a driving apparatus. The method may also include receiving a second obstacle parameter of a second obstacle. The second obstacle parameter may be detected by the one or more sensors equipped on the driving apparatus. The second obstacle parameter may be detected by the one or more sensors within a first predetermined period of time from detecting the first obstacle parameter by the one or more sensors. The method may further include receiving a first maneuvering adjustment to the operation of the driving apparatus. The first maneuvering adjustment may be made after detecting the first obstacle parameter but before an end of a second predetermined period of time starting from detecting the second obstacle parameter. The method may further include associating the first maneuvering adjustment with the first obstacle parameter. The method may also include associating the first maneuvering adjustment with the second obstacle parameter. The method may further include training a neural network. The training of the neural network may be based at least on the association of the first maneuvering adjustment and the first obstacle parameter or the association of the first maneuvering adjustment and the second obstacle parameter.

In some embodiments, the method may further include receiving a second maneuvering adjustment to the operation of the driving apparatus. The second maneuvering adjustment may be made after detecting the first obstacle parameter but before the end of the second predetermined period of time starting from detecting the second obstacle parameter. The method may further include associating the second maneuvering adjustment with the first obstacle parameter. The method may also include associating the second maneuvering adjustment with the second obstacle parameter. The training of the neural network may be base further on the association of the second maneuvering adjustment with the first obstacle parameter or the association of the second maneuvering adjustment with the second obstacle parameter.

In some embodiments, the method may further include receiving a third obstacle parameter of a third obstacle. The third obstacle parameter may be detected by the one or more sensors equipped on the driving apparatus. The third obstacle parameter may be detected by the one or more sensors within the first predetermined period of time from detecting the second obstacle parameter by the one or more sensors. The method may further include associating the first maneuvering adjustment with the third obstacle parameter. The method may also include associating the second maneuvering adjustment with the third obstacle parameter. The training of the neural network may be base further on the association of the first maneuvering adjustment with the third obstacle parameter or the association of the second maneuvering adjustment with the third obstacle parameter.

In some embodiments, the first obstacle parameter may include at least one of a first distance between the first obstacle and the driving apparatus, a first angle of the first obstacle with respect to a traveling direction of the driving apparatus, a first moving speed of the first obstacle, a first moving direction of the first obstacle, or a first size parameter of the first obstacle. In some embodiments, the second obstacle parameter may include at least one of a second distance between the second obstacle and the driving apparatus, a second angle of the second obstacle with respect to the traveling direction of the driving apparatus, a second moving speed of the second obstacle, a second moving direction of the second obstacle, or a second size parameter of the second obstacle. The first angle and the second angle may be different. In some embodiments, the first maneuvering adjustment may include at least one of a direction maneuvering adjustment for adjusting a traveling direction of the driving apparatus or a speed maneuvering adjustment for adjusting a traveling speed of the driving apparatus.

In some embodiments, the method may further include receiving a fourth obstacle parameter of a fourth obstacle. The fourth obstacle parameter may be detected by the one or more sensors equipped on the driving apparatus. The method may further include receiving a fifth obstacle parameter of a fifth obstacle. The fifth obstacle parameter may be detected by the one or more sensors equipped on the driving apparatus. The fifth obstacle parameter may be detected by the one or more sensors within the first predetermined period of time from detecting the fourth obstacle parameter by the one or more sensors. The method may further include generating, by the trained neural network, a third maneuvering adjustment to the operation of the driving apparatus. The third maneuvering adjustment may be generated by the neural network in response at least to receiving the fourth obstacle parameter or to receiving the fifth obstacle parameter.

In some embodiments, the method may further include receiving a sixth obstacle parameter of a sixth obstacle. The sixth obstacle parameter may be detected by the one or more sensors equipped on the driving apparatus. The sixth obstacle parameter may be detected by the one or more sensors within the first predetermined period of time from detecting the fifth obstacle parameter by the one or more sensors. The method may further include generating, by the trained neural network, a fourth maneuvering adjustment to the operation of the driving apparatus. The fourth maneuvering adjustment may be generated by the neural network in response at least to receiving the fourth obstacle parameter, to receiving the fifth obstacle parameter, or to receiving the sixth obstacle parameter.

In some embodiments, the training of the neural network may be performed onboard the driving apparatus. In some embodiments, the training of the neural network may be performed by a central neural network in communication with the driving apparatus over a network. In some embodiments, the method may further include implementing the trained neural network to an onboard control system of the driving apparatus.

In some embodiments, another method for facilitating traveling or operation of a driving apparatus may include determining a first obstacle parameter of a first obstacle. The first obstacle parameter may be detected by one or more sensors equipped on a driving apparatus. The method may further include determining a second obstacle parameter of a second obstacle. The second obstacle parameter may be detected by the one or more sensors equipped on the driving apparatus. The second obstacle parameter may be detected by the one or more sensors within a first predetermined period of time from detecting the first obstacle parameter by the one or more sensors. The method may further include determining a first maneuvering adjustment to the operation of the driving apparatus. The first maneuvering adjustment may be made after detecting the first obstacle parameter but before an end of a second predetermined period of time starting from detecting the second obstacle parameter. The method may further include transmitting, to a neural network, the first obstacle parameter, the second obstacle parameter, and the first maneuvering adjustment for training the neural network. In some embodiments, the method may further include associating the first maneuvering adjustment with the first obstacle parameter. The method may also include associating the first maneuvering adjustment with the second obstacle parameter.

In some embodiments, the method may further include determining a second maneuvering adjustment to the operation of the driving apparatus. The second maneuvering adjustment may be made after detecting the first obstacle parameter but before the end of the second predetermined period of time starting from detecting the second obstacle parameter. The method may further include associating the second maneuvering adjustment with the first obstacle parameter. The method may also include associating the second maneuvering adjustment with the second obstacle parameter. The method may further include transmitting, to the neural network, the second maneuvering adjustment for training the neural network.

In some embodiments, the method may further include determining a third obstacle parameter of a third obstacle. The third obstacle parameter may be detected by the one or more sensors equipped on the driving apparatus. The third obstacle parameter may be detected by the one or more sensors within the first predetermined period of time from detecting the second obstacle parameter by the one or more sensors. The method may further include associating the first maneuvering adjustment with the third obstacle parameter. The method may also include associating the second maneuvering adjustment with the third obstacle parameter. The method may further include transmitting, to the neural network, the third obstacle parameter for training the neural network.

In some embodiments, the first obstacle parameter may include at least one of a first distance between the first obstacle and the driving apparatus, a first angle of the first obstacle with respect to a traveling direction of the driving apparatus, a first moving speed of the first obstacle, a first moving direction of the first obstacle, or a first size parameter of the first obstacle. In some embodiments, the second obstacle parameter may include at least one of a second distance between the second obstacle and the driving apparatus, a second angle of the second obstacle with respect to the traveling direction of the driving apparatus, a second moving speed of the second obstacle, a second moving direction of the second obstacle, or a second size parameter of the second obstacle. The first angle and the second angle may be different. In some embodiments, the first maneuvering adjustment may include at least one of a direction maneuvering adjustment for adjusting a traveling direction of the driving apparatus or a speed maneuvering adjustment for adjusting a traveling speed of the driving apparatus.

In some embodiments, the method may further include determining a fourth obstacle parameter of a fourth obstacle. The fourth obstacle parameter may be detected by the one or more sensors equipped on the driving apparatus. The method may further include determining a fifth obstacle parameter of a fifth obstacle. The fifth obstacle parameter may be detected by the one or more sensors equipped on the driving apparatus. The fifth obstacle parameter may be detected by the one or more sensors within the first predetermined period of time from detecting the fourth obstacle parameter by the one or more sensors. The method may further include transmitting, to the neural network, the fourth obstacle parameter, the fifth obstacle parameter. The method may further include receiving, from the neural network, a third maneuvering adjustment to the operation of the driving apparatus. The third maneuvering adjustment may be generated by the neural network in response at least to receiving the fourth obstacle parameter or to receiving the fifth obstacle parameter.

In some embodiments, the method may further include determining a sixth obstacle parameter of a sixth obstacle. The sixth obstacle parameter may be detected by the one or more sensors equipped on the driving apparatus. The sixth obstacle parameter may be detected by the one or more sensors within the first predetermined period of time from detecting the fifth obstacle parameter by the one or more sensors. The method may further include transmitting, to the neural network, the sixth obstacle parameter. The method may further include receiving, from the neural network, a fourth maneuvering adjustment to the operation of the driving apparatus. The fourth maneuvering adjustment may be generated by the neural network in response at least to receiving the fourth obstacle parameter, to receiving the fifth obstacle parameter, or to receiving the sixth obstacle parameter.

In some embodiments, the method may further include processing the first obstacle parameter into a characteristic value by comparing the first obstacle parameter with a plurality of predetermined range values. In some embodiments, the method may further include processing the first obstacle parameter into a plurality of characteristic values by comparing the first obstacle parameter with a plurality of predetermined range values. The method may also include assigning each of the plurality of the characteristic values a degree value.

This summary is not intended to identify key or essential features of the claimed subject matter, nor is it intended to be used in isolation to determine the scope of the claimed subject matter. The subject matter should be understood by reference to appropriate portions of the entire specification, any or all drawings, and/or claims.

### BRIEF DESCRIPTION OF THE DRAWINGS

The accompanying drawings, which are included to provide a further understanding of the invention, are incorporated in and constitute a part of this specification, illustrate embodiments of the invention and together with the detailed description serve to explain the principles of the invention. No attempt is made to show structural details of the invention in more detail than may be necessary for a fundamental understanding of the invention and various ways in which it may be practiced.
FIG. 1 illustrates an exemplary driving apparatus in accordance with the disclosure.
FIG. 2 illustrates exemplary maneuvering adjustments made to the traveling of a driving apparatus in accordance with the disclosure.
FIG. 3 illustrates further exemplary maneuvering adjustments made to the traveling of a driving apparatus in accordance with the disclosure.
FIG. 4 illustrates an exemplary onboard control system of a driving apparatus for facilitating driverless driving in accordance with the disclosure.
FIGS. 5A, 5B, and 5C illustrate exemplary relationships between various obstacle information detected and various characteristic values of the obstacles detected for facilitating driverless driving in accordance with the disclosure.
FIG. 6 illustrates an exemplary determination of additional characteristic values based on one or more characteristic values of an obstacle detected for facilitating driverless driving in accordance with the disclosure.
FIG. 7 illustrates an exemplary central neural network for facilitating driverless driving in accordance with the disclosure.
FIG. 8 illustrates an exemplary method for training and implementing a neural network for facilitating driverless driving in accordance with the disclosure.
FIG. 9 illustrates a simplified computer system, according to an exemplary embodiment of the present disclosure.

In the appended figures, similar components and/or features may have the same numerical reference label. Further, various components of the same type may be distinguished by following the reference label by a letter that distinguishes among the similar components and/or features. If only the first numerical reference label is used in the specification, the description is applicable to any one of the similar components and/or features having the same first numerical reference label irrespective of the letter suffix.

### DETAILED DESCRIPTION OF THE INVENTION

Various specific embodiments of the present disclosure will be described below with reference to the accompanying drawings constituting a part of this specification. It should be understood that, although structural parts and components of various examples of the present disclosure are described by using terms expressing directions, e.g., "front", "back", "upper", "lower", "left", "right" and the like in the present disclosure, these terms are merely used for the purpose of convenient description and are determined on the basis of exemplary directions displayed in the accompanying drawings. Since the embodiments disclosed by the present disclosure may be set according to different directions, these terms expressing directions are merely used for describing rather than limiting. Under possible conditions, identical or similar reference numbers used in the present disclosure indicate identical components.

Machine learning or artificial neural network may be applied in driverless driving. Existing techniques often rely on the neural network for image analysis and object recognition, such as the examples described in the article entitled Convolutional Neural Networks in Autonomous Vehicle Control Systems by Erin Welling and Maddie Oppelt. The technique described in the article entitled End to End Learning for Self-Driving Cars by NVIDIA Corporation attempted to avoid the need to recognize specific human-designated features by the neural network, but it still relied heaviliy on image frames of road conditions captured by a camera onboard the vehicle and required the neural network to map raw pixels from the cemra to steering commands. However, image analysis, especially pixel-by-pixel analysis, may take significant amount of computing resources and require long processing times, which may limit the application of neural networks to driverless driving technologies. The technology described herein may be used to establish a neural network for driverless driving that may not require pixel-by-pixel image analysis. Further, the technolgoy described herein can detect and process multiple obstacles simultaneously.

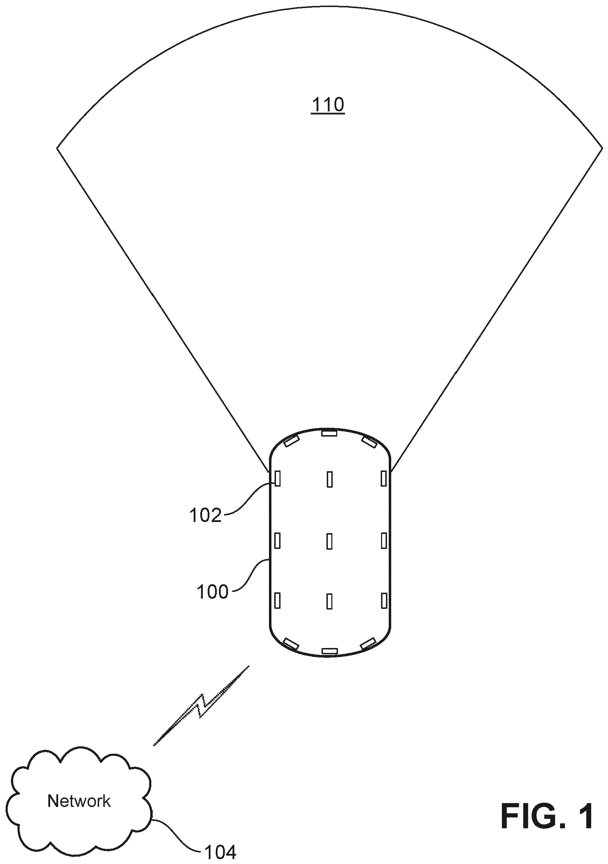

**FIG. 1** illustrates an exemplary driving apparatus 100 the traveling or operation data of which may be utilized for establishing a neural network for facilitating driverless driving. The driving apparatus 100 may include any driving apparatus that moves in distance. Examples of driving apparatus 100 may include a vehicle such as a car, a bus, a train, a truck, a tram, or any other type of vehicle; may include a vessel such as a boat, a ship, a barge, a ferry or any other type of watercraft; may include an aircraft such as an airplane, a spaceship, or any other type of aircraft; or may include any other transportation apparatus. In some embodiments, the driving apparatus 100 may include an autonomous driving apparatus. In some embodiments, the driving apparatus 100 may be operated by a human operator. In some embodiments, the human operator may be assisted by an autonomous driving control system onboard the driving apparatus 100.

When the driving apparatus 100 is moving or about to move, whether moving forward, backward, or turning, the driving apparatus 100 may encounter one or more obstacles that may require one or more maneuvering adjustments to the traveling or operation of the driving apparatus 100 so as to avoid collision with the obstacles. In the embodiments where the driving apparatus 100 may be operated by a human operator, the human operator may observe the surroundings of the driving apparatus 100 and adjust the maneuvering of the driving apparatus 100 as the human operator may see fit. In the embodiments where the driving apparatus 100 may be an autonomous driving apparatus and may be operated by an onboard control system (to be described in more details below), or in the embodiments where the driving apparatus 100 may be operated by the human operator who may be assisted by the onboard control system, the driving apparatus 100 may be equipped with one or more sensors 102 configured to detect obstacles along the traveling route of the driving apparatus 100. The sensors 102 may include imaging sensors, motion sensors, sound sensors, thermal sensors, color sensors, and so on. Although FIG. 1 illustrates sensors 102 positioned along a periphery or a top of the driving apparatus 100, this is not intended to be limiting. The driving apparatus 100 may be equipped with sensors 102 at or near the top of the driving apparatus 100, at or near the bottom of the driving apparatus 100, at or near the side of the driving apparatus 100, inside the driving apparatus 100, or at any suitable part of the driving apparatus 100.

As will be described in more detail below, the onboard control system may be configured with a trained neural network for generating one or more maneuvering adjustments for adjusting the traveling or operation of the driving apparatus 100. To train or establish the neural network, the driving apparatus 100 may be operated by a human operator before the onboard control system for autonomously driving the driving apparatus 100 may be enabled. As the human operator operates the driving apparatus 100, traveling or operation data may be collected. The traveling or operation data may include data of obstacles detected by the sensors 102 of the driving apparatus 100, adjustments made to the traveling or operation of the driving apparatus 100 by the human operator, and so on. The collected traveling or operation data may be utilized for training or establishing the neural network. Once the neural network is trained, the trained neural network may be configured onto the onboard control system for autonomously driving the driving apparatus 100 and/or for assisting a human operation in operating the driving apparatus 100.

With further reference to FIG. 1, the sensors 102 of the driving apparatus 100 may be configured to detect obstacles within or coming into a detection zone 110 of the driving apparatus 100. The detection zone 110 of the driving apparatus 100 may be an area surrounding or leading the driving apparatus 100 within which the sensors 102 may be configured to monitor obstacles for determining whether the driving apparatus 100 may continue traveling along a path it has been traveling or whether any maneuver adjustment may be made. The detection zone 110 leading the driving apparatus 100 may refer to any area that the driving apparatus 100 may move into by moving forward, backward, or turning. Therefore, the detection zone 110 may be an area leading a front portion of the driving apparatus 100, leading a back portion of the driving apparatus 100, leading a side portion of the driving apparatus 100, leading a combination of the front, side, and/or back of the driving apparatus 100, and so on.

Although FIG. 1 illustrates a detection zone 110 that may be substantially pie-shaped, the detection zone 110 may be of any shape. Further, the detection zone 110 may not be limited to an area leading the driving apparatus 100, but may include an area surrounding the driving apparatus 100 up to 360 degrees. This way, the driving apparatus 100 may not only make appropriate maneuver adjustments as it moves closer to any obstacles, the driving apparatus 100 may also make maneuver adjustments if any obstacle moves toward the driving apparatus 100 from the front, side, and/or back of the driving apparatus 100 unexpectedly.

The detection zone 110 may be predetermined or dynamically determined based on parameters intrinsic and/or extrinsic to the driving apparatus 100. Parameters intrinsic to the driving apparatus 100 may include the traveling direction (e.g., forward, backward, turning, etc.) of the driving apparatus 100, the traveling speed of the driving apparatus 100, the size and shape of the driving apparatus 100, and so on. Parameters extrinsic to the driving apparatus 100 may include road conditions, weather conditions, and so on. For example, parameters related to road conditions may include whether the road is an asphalt road, a concrete path, a dirt path, a sandy path, a flat path, a sloped path, a bumpy path, a curvy path, and so on. Parameters related to weather conditions may include whether it is sunny, snowing, raining, foggy, and so on.

In some embodiments, in addition to obtaining obstacle information through the sensors 102, the driving apparatus 100 may include a memory component preprogrammed with road and/or traffic maps, which may include information that may trigger a maneuvering adjustment to the operation of the driving apparatus 100. Such information may include traffic signs, such as turning signs, yielding signs, stop signs, speed limit, etc., and may include road information, such as rest stops, gas stations, charge stations, restaurants, shops, or any other points of interest.

In some embodiments, the driving apparatus 100 may be further configured with a communication component for receiving obstacle information from a network 104. The network 104 may include a traffic or road condition network that may broadcast information on traffic and/or road conditions, such as traffic jams, accidents, roadside constructions, and so on. When the driving apparatus 100 may be configured to receive obstacle information from the network 104, the detection zone 110 may be expanded given that the network 104 may gather information beyond the detection capabilities of the sensors 102 of the driving apparatus 100. Therefore, the detection zone 110 may encompass an area corresponding to a portion or the entire coverage zone of the network 104.

The various examples of the obstacles described herein are not intended to be limiting. The obstacles may include objects that the driving apparatus 100 may need to go around or avoid, such as vehicles, persons, bicycles, animals, or any objects obstructing the traveling path of the driving apparatus 100. The obstacles may further include instructional signs that the driving apparatus 100 may need to follow, such as stop signs, yield signs, turning signs, speed limit, and so on. The obstacles may further include informational signs that the driving apparatus 100 may need to process and then follow, such as charging station signs, rest stop signs, and so on. The obstacles may further include situations that may affect the travel route of the driving apparatus 100, such as road construction, accidents, traffic jams, and so on. Therefore, the term obstacle is used herein to refer to any object, condition, or situation that may trigger a maneuver adjustment to the traveling or operation of the driving apparatus 100.

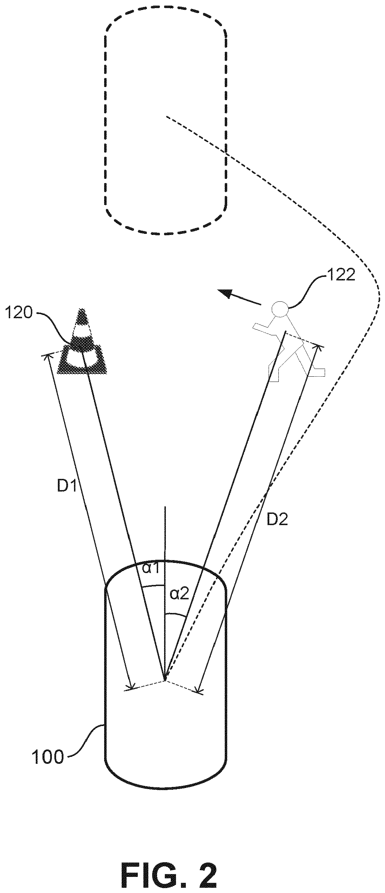

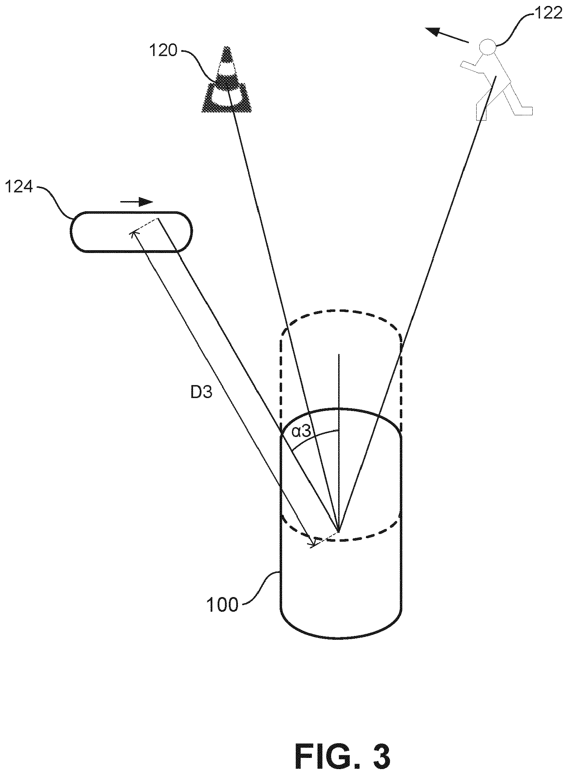

As discussed above, the driving apparatus 100 may be operated by a human operator and the maneuvering adjustments made by the human operator to the traveling or operation of the driving apparatus 100 may be collected for training or establishing a neural network for facilitating driverless driving. **FIGS. 2** **and** **3** illustrate schematically exemplary maneuvering adjustments which may be made by the human operator during the traveling or operation of the driving apparatus 100 upon observation of one or more obstacles by the human operator.

As shown in FIG. 2, during the traveling or operation of the driving apparatus 100, the human operator may observe a first obstacle 120 and a second obstacle 122 that may be in or coming into the traveling path of the driving apparatus 100. The first obstacle 120 may be located at a distance of D1 from the driving apparatus 100 and at an angle of α1 with respect to the traveling path of the driving apparatus 100. The second obstacle 122 may be located at a distance of D2 from the driving apparatus 100 and at an angle of α2 with respect to the travel path of the driving apparatus 100. The distances D1, D2 and the angles α1, α2 of the respective obstacles 120, 122 may be detected by the sensors 102 (not illustrated in FIG. 2) of the driving apparatus 100. The distances D1, D2 of the first and second obstacles 120, 122 may be the same or different, whereas the angles α1, α2 of the first and second obstacles 120, 122 may be different. The first obstacle 120 may be a non-moving obstacle, such as a traffic cone, rock, parked vehicle, and so on. The second obstacle 122 may be a moving obstacle, such as a moving vehicle, a running child, and so on, a moving direction of which is indicated by an arrow leading the second obstacle 122. As will be described in detail below, the obstacle information detected by the sensors 102, such as the distances D1, D2, the angles α1, α2, and/or the movement of the second obstacle 122, may be utilized for training the neural network for facilitating driverless driving and for subsequently autonomously driving the driving apparatus 100 by the trained neural network. However, at least during the training period, the human operator may or may not rely on or utilize the sensor data for making necessary maneuvering adjustments to avoid collision with the obstacles detected.

To avoid collision with any obstacles detected, such as the first and second obstacles 120, 122 shown in FIG. 2, the human operator may, based on his or her judgment of the situation, such as the size, movement, and/or location of the obstacles 120, 122, make one or more maneuvering adjustments to the traveling or operation of the driving apparatus 100. For example, the human operator may make adjustments to the traveling direction and/or the traveling speed of the driving apparatus 100 such that the driving apparatus 100 may travel along a path as indicated by the dotted line in FIG. 2. Specifically, the human operator may first turn the driving apparatus 100 slightly right so that the driving apparatus 100 may move behind and pass the second obstacle 122. This turn may also allow the driving apparatus 100 to avoid the first obstacle 120. After passing the first and second obstacles 120, 122, the human operator may then turn the driving apparatus 100 left so that the driving apparatus 100 move back to its original traveling path, as indicated by the dashed line in FIG. 2. When making these turns, the human operator may further reduce the traveling speed of the driving apparatus 100. As the driving apparatus 100 moves back to its original traveling path, the human operator may accelerate the driving apparatus 100 back to its original traveling speed.

With reference to FIG. 3, in addition to the first and second obstacles 120, 122, a third obstacle 124 may also come into the traveling path of the driving apparatus 100. The distance D3 of the third obstacle may be the same as or different from the distances D1, D2 of the first and second obstacles 120, 122, whereas the angle α3 of the third obstacle 124 may be different from at least one of the angles α1, α2 of the first or second obstacles 120, 122. The third obstacle 124 may be another moving obstacle, such as a moving vehicle, a running child, and so on, a moving direction of which is indicated by an arrow above the third obstacle 124. In the situation illustrated in FIG. 3, the presence, especially the movement, of the third obstacle 124 may make it too dangerous to make the same or similar maneuvering adjustments as illustrated in FIG. 2. The human operator may immediately stop the driving apparatus 100 to avoid collision with any of the obstacles 120, 122, 124. Accordingly, the driving apparatus 100 may be stopped after a short displacement, as indicated by the dashed line in FIG. 3. Although FIGS. 2 and 3 illustrate only two or three obstacles, it should be understood that more or less obstacles may be present in or come into the traveling path or the detection zone (not illustrated in FIGS. 2 and 3) of the driving apparatus 100. Additionally, the human may make similar or different maneuvering adjustments to avoid collision with any of the obstacles. As the human operator make various maneuvering adjustments during traveling or operation of the driving apparatus 100, the maneuvering adjustments made by the human operator may also be collected for training the neural network for facilitating driverless driving.

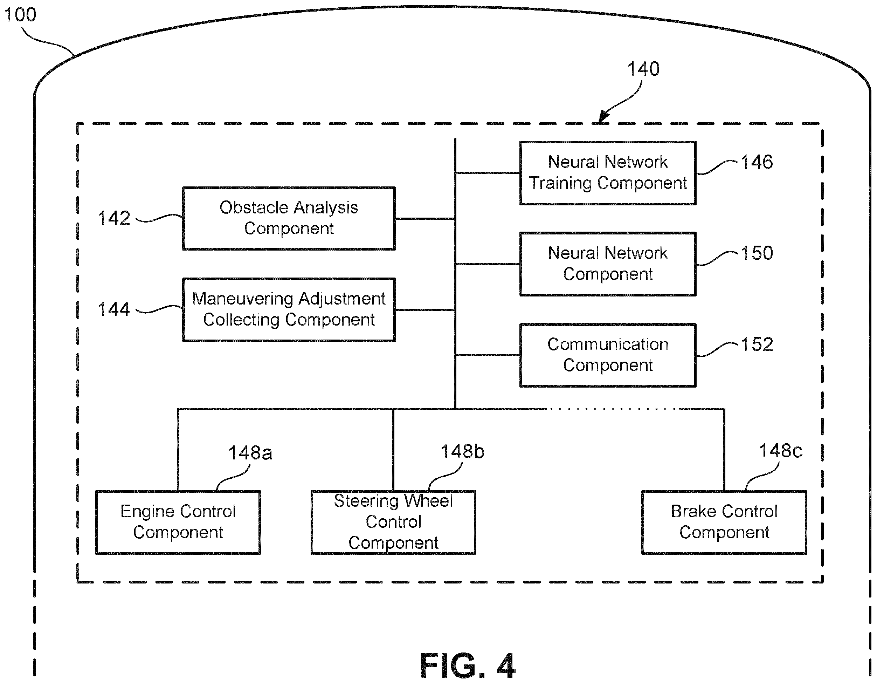

With reference to **FIG. 4****,** to collect the maneuvering adjustments made by the human operator for training or establishing the neural network for facilitating driverless driving, the driving apparatus 100 may be configured with an onboard control system 140 which may be implemented via one or more computing or processing devices or systems. The onboard control system 140 may include an obstacle analysis component 142, a maneuvering adjustment collecting component 144, and a neural network training component 146 operably coupled with each other. The obstacle analysis component 142 may be configured to collect and/or process obstacle information detected by the sensors 102 of the driving apparatus 100, such as information of the first, second, and third obstacles 120, 122, 124 discussed above with reference to FIGS. 2 and 3. The maneuvering adjustment collecting component 144 may be configured to collect and process maneuvering adjustments made to the traveling or operation of the driving apparatus 100, such as the maneuvering adjustments made by the human operator upon observation of the first, second, and/or third obstacles 120, 122, 124. The neural network training component 146 may be configured to collect the obstacle information processed by the obstacle analysis component 142 and the maneuvering adjustments processed by the maneuvering adjustment collecting component 144. The neural network training component 146 may be further configured to process the collected obstacle information and maneuvering adjustments for training or establishing the neural network for facilitating driverless driving.

Depending on the obstacles detected, the obstacle information collected by the obstacle analysis component 142 from the sensors 102 may vary. For example, if the detected obstacle is an object that may obstruct the passage of the driving apparatus 100, then the obstacle information may include one or more of the following obstacle parameters, such as position parameters which may include distances of the obstacles from the driving apparatus 100 and angles at which the respective obstacles may be positioned with respect to the traveling direction of the driving apparatus 100, movement parameters which may include directions of movement of the obstacles, moving speeds of the obstacles, shape and/or size parameters of the obstacles, and so on. The types of obstacle parameters the obstacle analysis component 142 may collect from the sensors 102 as described herein are not intended to be limiting. More or less obstacle parameters may be collected by the obstacle analysis component 142 from the sensors 102.

In some embodiments, the obstacle analysis component 142 may output the exact values of the obstacle parameters detected by the sensors 102 to the neural network training component 146. In some embodiments, to improve the processing speed of the obstacle parameters by the neural network training component 146, the obstacle analysis component 142 may process the exact values of the obstacle parameters into characteristic values, and then output the characteristic values to the neural network training component 146.

For example, in some embodiments, the obstacle analysis component 142 may process one or more position parameters of the obstacle detected into a predetermined set of position characteristic values. The position parameters of the obstacle detected may include a distance parameter indicating a distance of the obstacle from the driving apparatus 100. Accordingly, the position characteristic values may include a predetermined set of distance characteristic values which may include "very close," "close," "medium," "far," "very far," and such. The distance characteristic values may be determined by comparing the detected distance parameter of the obstacle with a predetermined set of range values. Each of the predetermined set of range values may correspond to a characteristic value. For example, the predetermined set of range values may include 0 to 5 yards (corresponding to the distance characteristic value of "very close"), 5 to 15 yards (corresponding to the distance characteristic value of "close"), 15 to 20 yards (corresponding to the distance characteristic value of "medium"), 20 to 30 yards (corresponding to the distance characteristic value of "far"), over 30 yards (corresponding to the distance characteristic value of "very far"), and so on. The numbers of the ranges and the characteristic values listed herein are illustrative and not intended to be limiting. Other ranges may be selected in various embodiments. If the detected distance parameter of the obstacle falls within a particular range, then the obstacle analysis component 142 may assign the corresponding characteristic value to the obstacle detected.

In some embodiments, the predetermined ranges may overlap, and there may be more than one distance characteristic value which may be assigned to each obstacle detected. Therefore, in addition to assigning multiple distance characteristic values to each obstacle detected, the obstacle analysis component 142 may further assign a degree value ranging from 0 to 1 for each of the distance characteristic values assigned. The degree value may indicate a degree of a particular distance characteristic each obstacle may possess.

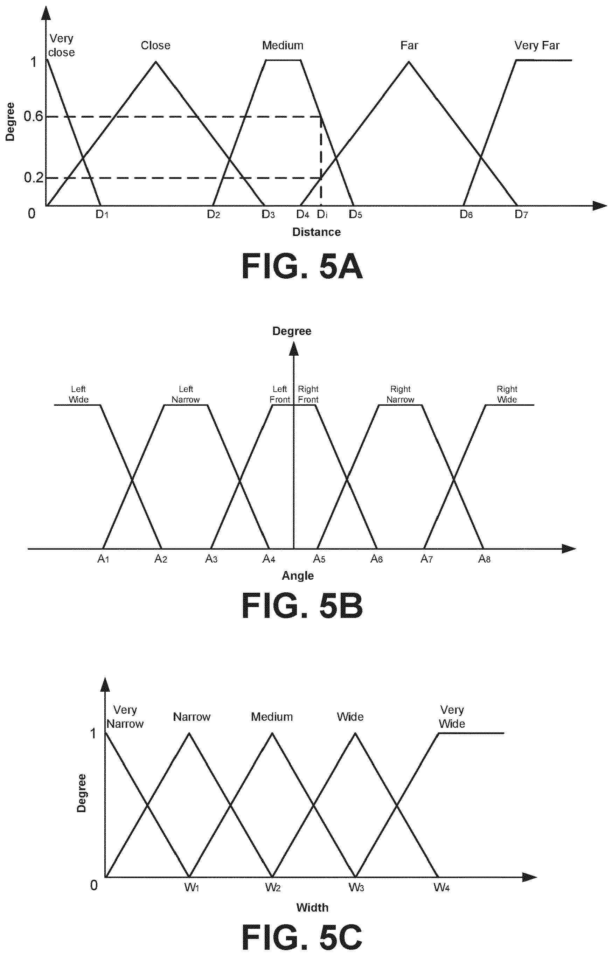

**FIG. 5A** illustrates an exemplary relationship between the degree value, the distance characteristic value, and the detected distance parameter of an obstacle. FIG. 5A is not intended to be limiting, and the relationship between the detected parameters, the degree values, and the characteristic values may be linear or nonlinear, symmetrical or asymmetrical, and so on. As shown in FIG. 5A, for example, for a detected distance parameter Dᵢ of the obstacle, the obstacle analysis component 142 may assign both the distance characteristic value of "medium" and the distance characteristic value of "far" to the obstacle detected because the detected distance parameter Dᵢ falls within the range between D₄ and D₅. In addition, the obstacle analysis component 142 may further assign a degree value of 0.6 associated with the characteristic value of "medium" to the obstacle and may assign a degree value of 0.2 associated with the characteristic value of "far" to the obstacle. The obstacle analysis component 142 may transmit both the distance characteristic values and the associated degree values to the neural network training component 146 for training or establishing the neural network for facilitating driverless driving.

In some embodiments, the position parameters of the obstacle detected by the sensors 102 may further include an angle parameter indicating an angle at which the obstacle may be located with respect to the traveling direction of the driving apparatus 100. Accordingly, the position characteristic values may further include a predetermined set of angle characteristic values. In some embodiments, the angle characteristic values may include "left wide," "left narrow," "left front," "right front," "right narrow," "right wide," and so on. The obstacle analysis component 142 may process the angle parameter into one or more of the angle characteristic values. The angle characteristic values for each obstacle may be determined by comparing the detected angle parameter of the obstacle with a predetermined set of range values. Each of the predetermined set of range values may correspond to an angle characteristic value. For example, the predetermined set of range values may include over 60 degrees to the left of the traveling direction of the driving apparatus 100 (corresponding to the angle characteristic value of "left wide"), 30 to 60 degrees to the left of the traveling direction of the driving apparatus 100 (corresponding to the angle characteristic value of "left narrow"), 0 to 30 degrees to the left of the traveling direction of the driving apparatus 100 (corresponding to the angle characteristic value of "left front"), 0 to 30 degrees to the right of the traveling direction of the driving apparatus 100 (corresponding to the angle characteristic value of "right front"), 30 to 60 degrees to the right of the traveling direction of the driving apparatus 100 (corresponding to the angle characteristic value of "right narrow"), over 60 degrees to the right of the traveling direction of the driving apparatus 100 (corresponding to the angle characteristic value of "right wide"), and so on. The numbers of the ranges and the characteristic values listed herein are illustrative and are not intended to be limiting. Other ranges may be selected in various embodiments. If the detected angle parameter of the obstacle falls within a particular range, then the obstacle analysis component 142 may assign the corresponding characteristic value to the obstacle detected.

In some embodiments, the ranges may overlap, and there may be more than one angle characteristic value associated with a detected angle parameter. Therefore, in addition to assigning multiple angle characteristic values to each obstacle detected, the obstacle analysis component 142 may further assign a degree value ranging from 0 to 1 for each of the angle characteristic values assigned. The degree value may indicate a degree of a particular angle characteristic each of the detected obstacles may possess. **FIG. 5B** illustrates an exemplary relationship between the degree value, the angle characteristic value, and the detected angle parameter of an obstacle. FIG. 5B is not intended to be limiting, and the relationship between the detected parameters, the degree values, and the characteristic values may be linear or nonlinear, symmetrical or asymmetrical, and so on.

In some embodiments, the obstacle analysis component 142 may further process movement parameters of the obstacle into a predetermined set of movement characteristic values. The movement parameters of each obstacle detected may include a moving speed parameter indicating a moving speed of the obstacle. Accordingly, the movement characteristic values may include a predetermined set of moving speed characteristic values, which may include "very fast," "fast," "medium," "slow," "very slow," and so on. Upon receiving the detected speed parameter of each obstacle, the obstacle analysis component 142 may assign one or more of the moving speed characteristic values to each obstacle in a manner similar to how the obstacle analysis component 142 may assign one or more of the above mentioned characteristic values to each obstacle (e.g., by comparing a detected speed parameter with a predetermined set of range values). In some embodiments, the ranges for determining the moving speed characteristic values may overlap. The obstacle analysis component 142 may then further assign degree values for the moving speed characteristic values assigned to each obstacle detected.

In some embodiments, the movement parameter of the obstacle detected may further include a direction parameter indicating a direction toward which each obstacle may be moving with respect to the driving apparatus 100. Accordingly, the movement characteristic values may include a predetermined set of direction characteristic values, which may include "moving away," "neutral," "moving close," and so on. The obstacle analysis component 142 may process the direction parameter into one or more of the direction characteristic values by determining whether the distance of the obstacle from the driving apparatus 100 may be increasing or decreasing and/or whether the obstacle may be moving toward or away from the traveling path of the driving apparatus 100. If the distance of the obstacle from the driving apparatus 100 may be determined to be increasing and/or the obstacle may be determined to be moving away from the traveling path of the driving apparatus 100, then the obstacle analysis component 142 may assign a direction characteristic value of "moving away" to the obstacle detected. If the distance of the obstacle from the driving apparatus 100 may be determined to be decreasing and/or the obstacle may be determined to be moving toward the traveling path of the driving apparatus 100, then the obstacle analysis component 142 may assign a direction characteristic value of "moving close" to the obstacle detected. If a change in the distance of the obstacle from the driving apparatus 100 may be less than a predetermined value within a certain period of time and/or the obstacle may be neither moving away from or toward the traveling path of the driving apparatus 100, then the obstacle analysis component 142 may assign a direction characteristic value of "neutral" to the obstacle detect. The direction characteristic values listed herein are illustrative and not intended to be limiting. Other direction characteristic values may be utilized and assigned to each obstacle detected in various embodiments.

In some embodiments, the obstacle analysis component 142 may further process shape parameters of the obstacle into a predetermined set of shape characteristic values. The shape parameters of the obstacle detected may include a width parameter indicating a width of the obstacle detected. Accordingly, the shape characteristic values may include a predetermined set of width characteristic values which may include "very narrow," "narrow," "medium," "wide," "very wide," and so on. Upon receiving the detected width parameter of each obstacle, the obstacle analysis component 142 may assign one or more of the width characteristic values to the obstacle in a manner similar to how the obstacle analysis component 142 may assign one or more of the above mentioned angle characteristic values to the obstacle (e.g., by comparing a detected width parameter with a predetermined set of range values). For example, the predetermined set of range values may include 0 to 10 inches (corresponding to the width characteristic value of "very narrow"), 10 to 20 inches (corresponding to the width characteristic value of "narrow"), 20 to 30 inches (corresponding to the width characteristic value of "medium"), 30 to 40 inches (corresponding to the width characteristic value of "wide"), over 40 inches (corresponding to the width characteristic value of "very wide"), and so on. The numbers of the ranges and the characteristic values listed herein are illustrative and not intended to be limiting. Other ranges may be selected in various embodiments. If the detected width parameter of the obstacle falls within a particular range, then the obstacle analysis component 142 may assign the corresponding characteristic values to the obstacle detected.

In some embodiments, the ranges for determining the width characteristic values may overlap and multiple width characteristic values may be assigned to each obstacle detected. The obstacle analysis component 142 may then further assign degree values for the width characteristic values assigned to the obstacle detected. **FIG. 5C** illustrates an exemplary relationship between the degree value, the width characteristic value, and the detected width parameter of an obstacle. FIG. 5C is not intended to be limiting, and the relationship between the detected parameters, the degree values and the characteristic values may be linear or nonlinear, symmetrical or asymmetrical, and so on.

In some embodiments, the shape parameters of the obstacle detected may furhter include a height parameter indicating a height of the obstacle detected. Accordingly, the shape characteristic values may further include a predetermined set of height characteristic values which may include "very short," "short," "medium," "tall," "very tall," and so on. The obstacle analysis component 142 may assign to a detected obstacle a height characteristic value based on the detected height parameter of the obstacle in a manner similar to how the obstacle analysis component 142 assign the width characteristic value as discussed above (e.g., by comparing a detected height parameter with a predetermined set of range values). If the predetermined range values overlap, multiple height characteristic values may be assigned to each obstacle detected, and the obstacle analysis component 142 may further assign a degree value for each of the multiple height characteristic values. The shape characteristic values discussed herein are not intended to be limiting. Other shape characteristic values may be utilized, such as length characteristic values or diameter characteristic values which may be determined based on detected length and diameter parameters of obstacles detected by the sensors 102.

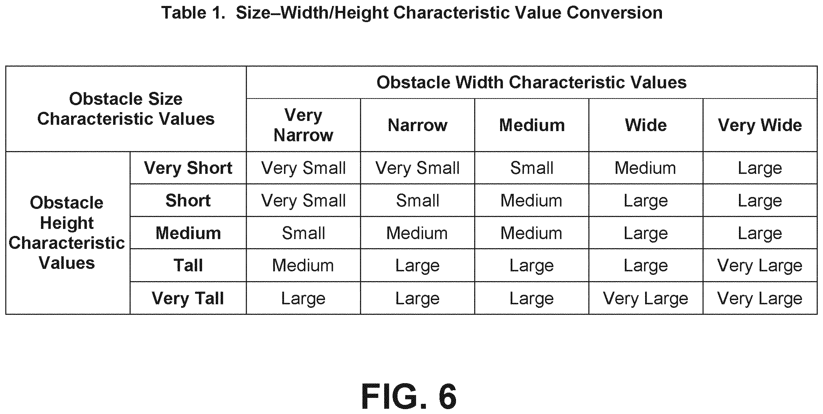

The obstacle analysis component 142 may further synthesize one or more of the shape characteristic values into a predetermined set of size characteristic values which may include "very small," "small," "medium," "large," "very large," and so on. In some embodiments, the obstacle analysis component 142 may determine the size characteristic values based on Table 1 shown in **FIG. 6****,** which illustrates an exemplary determination of the size characteristic values based on the width and height characteristic values. The determination illustrated in Table 1 is not intended to be limiting. The size characteristic values may be determined differently in other embodiments. For example, the size characteristic values may be determined by taking into consideration the length, diameter, weight, and any other parameters of the obstacles detected.

Once the obstacle analysis component 142 finishes processing the obstacle parameters into one or more characteristic values, the obstacle analysis component 142 may output the characteristic values to the neural network training component 146. The neural network training component 146 may further process the characteristic values and the associated degree values for training the neural network for facilitating driverless driving.

There are several advantages of processing the detected obstacle parameters into characteristic values. Because the characteristic values may be range based values, exact measurements of the obstacle parameters may not be required and approximation may be sufficient. Therefore, high power (such as high resolution or high definition) of the sensors 102 for detecting the obstacles may not be required. For example, instead of using high resolution/definition cameras for image capturing, surveying devices, such as radar, sonar, lidar, and so on, may be utilized for detection and measurement of obstacle parameters, which may help reduce the overall cost of the driving apparatus 100. Additionally, image captured by cameras may require line-by-line or pixel-by-pixel processing, which may result in long processing times. On the other hand, measurements collected by radar, sonar, lidar, or similar surveying devices may be processed much faster. This may greatly enhance the applicability of driverless driving technologies in real-life situations, where obstacles may suddenly appear and may require maneuver adjustments to be generated and implemented immediately by a driverless driving apparatus.

In some embodiments, the obstacle analysis component 142 may be further configured to time stamp the obstacle parameters of each obstacle detected by the sensors 102. For example, the obstacle analysis component 142 may associate a time parameter with each of the obstacle parameters. The time parameter may indicate the time at which the obstacle was detected by the sensors 102. In the embodiments where the obstacle analysis component 142 may process the obstacle parameters into characteristic values, the obstacle analysis component 142 may be further configured to associate the time parameter with each of the processed characteristic values. When the obstacle analysis component 142 may output the characteristic values to the neural network training component 146, the obstacle analysis component 142 may further output the associated time parameter to the neural network training component 146.

Referring back to FIG. 4, the operation of the maneuvering adjustment collecting component 144 will be described in more detail. As shown, the onboard control system 140 of the driving apparatus 100 may include a number of control components 148, such as an engine control component 148a, a steering wheel control component 148b, a brake control component 148c, and so on. The human operator of the driving apparatus 100 may adjust the traveling or operation of the driving apparatus 100 through one or more of the control components 148. It should be understood that the human operator may directly or indirectly operate or activate one or more control components 148. For example, the human operator may turn the steering wheel or step on the brake pedal in order to activate the steering wheel control component 148b or the brake control component 148c, respectively. Although FIG. 4 only illustrates the engine control component 148a, the steering wheel control component 148b, and the brake control component 148c, the onboard control system 140 may further include additional control components 148 for controlling the traveling or operation of the driving apparatus 100, such as air bag control component, heating and cooling control component, window control component, and so on. Each of the control component 148 may be implemented as one or more software and/or hardware components of the onboard control system 110.

As is also shown in FIG. 4, each of the control components 148 may be operatively coupled with the maneuvering adjustment collecting component 144. When the traveling or operation of the driving apparatus 100 may be adjusted by the human operator of the driving apparatus 100, the maneuvering adjustment collecting component 144 may collect information of the maneuvering adjustments by extracting relevant control data from the various control components 148. Depending on the obstacles the human operator may observe, the human operator may adjust the traveling speed of the driving apparatus 100 by activating the brake control component 148c, may adjust the traveling direction of the driving apparatus 100 by activating the steering wheel control component 148b, or may make any other appropriate maneuvering adjustments. Accordingly, the collected maneuvering adjustments may include adjusting the traveling speed of the driving apparatus 100, which may include increasing or decreasing the traveling speed of the driving apparatus 100 or stopping the driving apparatus 100 completely. The collected maneuvering adjustments may further include adjusting the traveling directing of the driving apparatus 100, which may include left turn by certain degrees, right turn by certain degrees, or a combination of left and right turns.

Similar to the obstacle analysis component 142 which may be configured to time stamp the obstacle parameters, the maneuvering adjustment collecting component 144 may be also configured to time stamp each of the maneuvering adjustments collected. For example, the maneuvering adjustment collecting component 144 may associate a time parameter with each of the maneuvering adjustments. The time parameter may indicate the time at which each of the maneuvering adjustments was made by the human operator of the driving apparatus 100. Accordingly, when the maneuvering adjustment collecting component 144 may output the maneuvering adjustments to the neural network training component 146, the maneuvering adjustment collecting component 144 may also output the associated time parameter to the neural network training component 146.

Based on the time parameters received from the obstacle analysis component 142 and the maneuvering adjustment collecting component 144, the neural network training component 146 may further process the obstacle parameters or the characteristic values received from the obstacle analysis component 142 and the maneuvering adjustments received from the maneuvering adjustment collecting component 144 to generate training data for training or establishing the neural network for facilitating driverless driving.

In some embodiments, the neural network training component 146 may be configured to associate select maneuvering adjustments with select obstacle parameters or characteristic values of an obstacle in response to which the select maneuvering adjustments were made by the human operator during the traveling or operation of the driving apparatus 100. This may be done by comparing the time parameters associated with the obstacle parameters or characteristic values and the time parameters associated with the maneuvering adjustments. For example, if the time difference between the time parameter associated with one particular maneuvering adjustment and the time parameter associated with one particular obstacle parameter or characteristic value may be less than a first predetermined period of time, then the neural network training component 146 may associate the particular maneuvering adjustment and the particular obstacle parameter or characteristic value with each other. The first predetermined period of time may be determined based on an average response time a human operator would take to respond to an obstacle that the human operator may observe. By comparing all the time parameters associated with the maneuvering adjustments received from the maneuvering adjustment collecting component 144 and all the time parameters associated with the obstacle parameters or characteristic values received from the obstacle analysis component 142, the neural network training component 146 may associate the obstacle parameters or characteristic values of each obstacle with all the maneuvering adjustments made by the human operator in response to his or her observation of the obstacle. The neural network training component 146 may then use the obstacle parameters or characteristic values of the obstacle as the input and the associated maneuvering adjustments as the target output to train the neural network for facilitating driverless driving.

In some embodiments, the neural network training component 146 may be further configured to associate one or more maneuvering adjustments with obstacle parameters or characteristic values of multiple obstacles if the one or more maneuvering adjustments were made by the human operator in response to his or her observation of the multiple obstacles. This may be done by comparing all the time parameters received from the obstacle analysis component 142 with each other. For example, if the time difference between the time parameter associated with one obstacle and the time parameter associated with another obstacle may be less than a second predetermined period of time, then the neural network training component 146 may determine that the maneuvering adjustments associated with each of the obstacles as described above were made by the human operator in response to his or her observation of both obstacles. The neural network training component 146 may then group these obstacles together as an obstacle group. The neural network training component 146 may also group all the maneuvering adjustments associated with each of the grouped obstacles into a maneuvering adjustment group. The second predetermined period of time may be greater or less than the first predetermined period of time as discussed above, and may be set as less than one second or a few seconds in various embodiments.

By comparing the time parameters associated with the obstacles, the neural network training component 146 may group all obstacles whose associate time parameters may be spaced apart less than the predetermined second period of time into one obstacle group. Accordingly, the neural network training component 146 may group a first obstacle and a second obstacle into one obstacle group if the time interval between the time parameter associated with the first obstacle and the time parameter associated with the second obstacle may be less than or about the second predetermined period of time, and the neural network training component 146 may further group a third obstacle into the obstacle group if the time interval between the time parameter associated with the second obstacle and the time parameter associated with the third obstacle may be less than or about the second predetermined period of time, and so on. The neural network training component 146 may then further group all the maneuvering adjustments associated with all the obstacles of a obstacle group into one maneuvering adjustment group. The neural network training component 146 may then use the obstacle parameters or characteristic values of each obstacle group as the input and the associated maneuvering adjustments of the corresponding maneuvering adjustment group as the target output to train the neural network for facilitating driverless driving. By training the neural network with data associated with grouped or multiple obstacles, the trained neural network may also be able to respond to multiple obstacles that the driving apparatus 100 may encounter when it may operate autonomously.

It should be noted that because the neural network training component 146 may group obstacles and the associated maneuvering adjustments by comparing the time parameters as discussed above, in some embodiments, the grouped obstacles may include multiple obstacles observed by the human operators at different moments and/or at different locations, and in some embodiments, the grouped obstacles may include only one obstacle observed by the human operator but the obstacle may move from one location to a different location with the second predetermined period of time. This is advantageous because the neural network training component 146 may not be required to track shift or movement of any particular obstacle or to distinguish one obstacle from another. As long as all the obstacle parameters may be detected by the sensors 102 within the predetermined second period of time, whether the obstacle parameters may be associated with one or more moving obstacles or multiple non-moving obstacles detected at different times and/or locations, the neural network training component 146 may treat the obstacle or obstacles as one obstacle group. Then the subsequently trained neural network may also treat the one or more moving obstacles or multiple non-moving obstacles as one obstacle group and may respond accordingly by generating and implementing one or more maneuvering adjustments like how a human operator would respond accordingly.

As the human operator may travel more with the driving apparatus 100, more traveling or operation data may be collected by the obstacle analysis component 142 and the maneuvering adjustment collecting component 144 for outputting to the neural network training component 146 for training the neural network. Once sufficient data may be collected and the neural network may be trained and tested, the trained neural network may be implemented to the onboard control system 110 for facilitate autonomous driving of the driving apparatus 100.

In some embodiments, the trained neural network may be implemented to the onboard control system 110 by programming the trained neural network to a neural network component 150 of the onboard control system 110. The neural network component 150 may be operably coupled with the obstacle analysis component 142 and the control components 148 of the driving apparatus 100. During operation, the neural network component 150 may be configured to receive obstacle parameters and/or characteristic values from the obstacle analysis component 142. Based on the obstacle parameters and/or characteristic values received, the neural network component 150 may utilize the trained neural network to generate one or more maneuvering adjustments. The generated maneuvering adjustments may then be outputted by the neural network component 150 to the appropriate control component 148 for adjusting the traveling or operation of the driving apparatus 100.

Because the neural network may be trained based on traveling or operation data involving multiple obstacles as discussed above, the neural network component 150 may be able to output one or more maneuvering adjustments in response to detection of multiple obstacles. For example, in the situations as illustrated in FIGS. 2 and 3, if the driving apparatus 100 may be operated autonomously by its onboard control system 140, then upon detection of the first, second, or third obstacles 120, 122, 124 by the sensors 102 of the driving apparatus 100, the neural network component 150 may utilize the trained neural network to generate maneuvering adjustments for avoiding collision with any of the obstacles 120, 122, 124. The generated maneuvering adjustments may include adjustments to the traveling direction of the driving apparatus 100, adjustments to the traveling speed of the driving apparatus 100, and/or any other appropriate adjustments. The maneuvering adjustments outputted by the neural network component 150 may be the same as or similar to the maneuvering adjustments made by the human operator as discussed above with reference to FIGS. 2 and 3.

In some embodiments, the neural network component 150 may be configured to assist the human operator in operating the driving apparatus 100 where the human operator's alertness to obstacles may decrease, or when the obstacles may appear so suddenly that the human operator may not be able to respond quickly enough. In those situations, , the neural network component 150 may be configured to take over the control of the operation of the driving apparatus 100 so as to avoid any potential collisions with the obstacles detected or any other undesirable consequences.

In some embodiments, instead of or in addition to configuring the onboard control system 110 of the driving apparatus 100 with an onboard neural network training component, i.e., the neural network training component 146 as described above with reference to FIG. 4, the traveling or operation data collected by the obstacle analysis component 142 and the maneuvering adjustment collecting component 144 may be transmitted to an "offline" central neural network, which may be configured to utilize the collected traveling or operation data to train or establish a neural network for facilitating driverless driving. By "offline" it simply means that the central neural network may not be onboard the driving apparatus 100. The central neural network may be configured on a computer system or a computer server. To transmit the traveling or operation data collected to the central neural network, the onboard control system 110 may be configured with a communication component 152. The communication component 152 may be configured to communication with the central neural network over a cable connection, a wireless connection, such as Bluetooth™ connection, or a network, which may be wired or wireless. There are several advantages of utilizing a central neural network. Because the central neural network may be configured "offline" with respect to the driving apparatus 100, the computing or processing resources of the onboard control system 110 may be reserved. Additionally, the central neural network may be configured to receive traveling or operation data not only from the driving apparatus 100, but also from other driving apparatuses as well, which may facilitate the training process by gathering more training data.

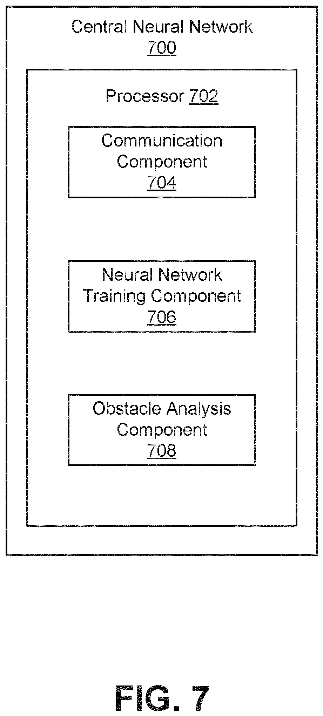

**FIG. 7** schematically illustrates an exemplary central neural network 700. The central neural network 700 may include a processor 702 for implementing the central neural network 700. The processor 702 may include a communication component 704 configured to receive traveling or operation data from one or multiple driving apparatuses, which may include the driving apparatus 100 described above. Using the driving apparatus 100 as an example, the communication component 704 may be configured to receive, through communication with the communication component 152 of the driving apparatus 100, traveling or operation data collected by the obstacle analysis component 142 and the maneuvering adjustment collecting component 144. The received traveling or operation data may include obstacle parameters, time parameters, or characteristic values of obstacles the driving apparatus 100 may have encountered and the corresponding maneuvering adjustments performed by the human operator. The communication component 704 may be further configured to receive other information from the driving apparatus 100 that may be useful for training the neural network, which may include information specific to each driving apparatuses, such as make, model, configuration of the individual onboard control systems, information about the individual human operators, and so on.

The communication component 704 may be configured to transmit the traveling or operation data received to a neural network training component 706 of the processor 702. The neural network training component 706 may be configured in a manner similar to how the neural network training component 146 may be configure. The neural network training component 706 may be configured to associate the obstacle parameters or characteristic values of the obstacles with the appropriate maneuvering adjustments by comparing their respective time parameters, similar to how the neural network training component 146 may associate the obstacle parameters or characteristic values of the obstacles with the appropriate maneuvering adjustments. The neural network training component 706 may also be configured to utilize the associated obstacle parameters or characteristic values of the obstacles and corresponding maneuvering adjustments to train or establish the neural network for facilitating driverless driving.

The neural network training component 706 may also be configured to group obstacles by comparing time parameters associated with each obstacles, similar to how the neural network training component 146 may group the obstacles. The neural network training component 706 may be further configured to group the maneuvering adjustments corresponding to the grouped obstacles, similar to how the neural network training component 146 may group the maneuvering adjustments corresponding to the grouped obstacles. The neural network training component 706 may be further configured to utilize the obstacle parameters or characteristic values of the grouped obstacles and the corresponding grouped maneuvering adjustments to train or establish the neural network for facilitating driverless driving.

As discussed above, because the central neural network 700 may be configured to receive traveling or operation data from multiple driving apparatuses, the communication component 704 may be configured to tag the traveling or operation data from each driving apparatus with a unique driving apparatus identifier, such as vehicle identification number, or other unique identifiers. This way, when the neural network training component 706 may compare the time parameters of the various traveling or operation data received to generate training data for training the neural network for facilitating driverless driving, the neural network training component 706 may be configured to distinguish traveling or operation data from one driving apparatus to another, even though the traveling or operation data received from different driving apparatuses may share same or similar time parameters.

In some embodiments, the processor 702 may be further configured with an obstacle analysis component 708, similar to the obstacle analysis component 142 of the onboard control system 110 of the driving apparatus 100. In these embodiments, the obstacle analysis component 142 may only need to collect the sensor data from the sensors 102 and transmit the collected sensor data to the central neural network 700 without processing the collected sensor data into characteristic values or such. This way, the processing or computing resources of the obstacle analysis component 142 may be reserved, and the software and/or hardware configuration of the onboard control system 140 may be reduced. The sensor data the obstacle analysis component 708 may receive from one or multiple driving apparatuses via the communication component 704 may include one or more following obstacle parameters, such as distances of the obstacles from the driving apparatuses, angles at which the obstacles may be positioned with respect to each driving apparatus, directions of movement of the obstacles when moving obstacles are involved, moving speeds of the obstacles, shapes and/or sizes of the obstacles, and so on.

The obstacle analysis component 708 may be configured to process the obstacle parameters received into characteristic values by comparing each obstacle parameter with predetermined range values or using any other suitable methods, similar to how the obstacle analysis component 142 may process the obstacle parameters into characteristic values. Accordingly, the obstacle analysis component 708 may process the distance obstacle parameters into distance characteristic values, the angle obstacle parameters into angle characteristic values, moving direction obstacle parameter into moving direction characteristic values, moving speed obstacle parameters into moving speed characteristic values, and so on. If the predetermined range values overlap, the obstacle analysis component 708 may further assign appropriate degree values to the characteristic values. The obstacle analysis component 708 may then output the processed characteristic values to the neural network training component 706. The neural network training component 706 may then associate and/or group the processed characteristic values received from the obstacle analysis component 708 with the maneuvering adjustments received from the maneuvering adjustment collecting component 144 of the driving apparatus 100 for training or establishing the neural network for facilitating driverless driving. Once the neural network for facilitating driverless driving may be trained or established, the trained neural network may be configured onto the onboard control system of each driving apparatus, such as the neural network component 150 of the driving apparatus 100 for facilitating the driverless driving of the driving apparatuses.

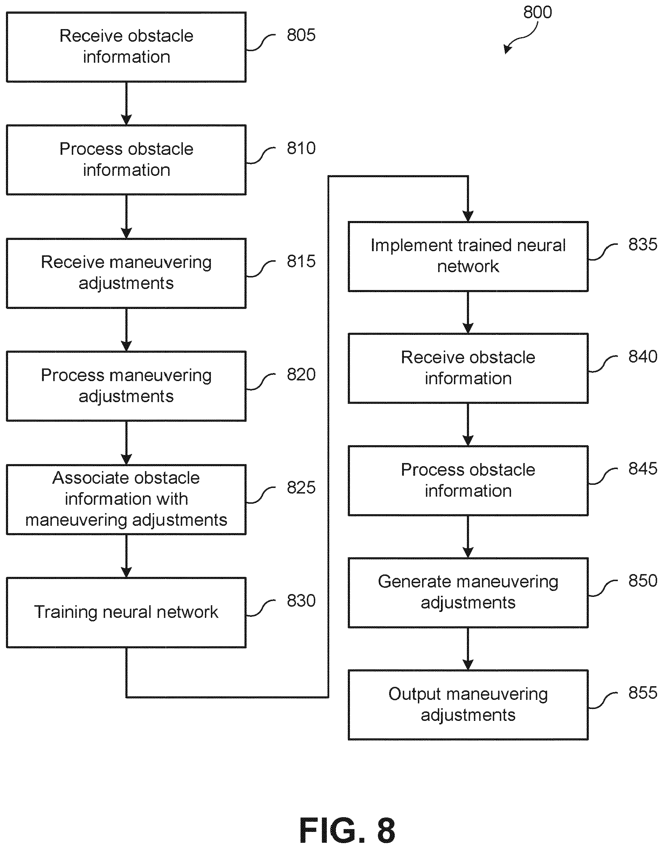

With reference to **FIG. 8****,** an exemplary method 800 for training and implementing a neural network for facilitating driverless driving is illustrated. The particular series of processing steps depicted in FIG. 8 is not intended to be limiting. It is appreciated that the processing steps may be performed in an order different from that depicted in FIG. 8 and that not all the steps depicted in FIG. 8 need be performed. In some embodiments, method 800 may be implemented by an onboard control system of a driving apparatus, such as the onboard controll system 140 of the driving apparatus 100 described above. In some embodiments, method 800 may be implemented by a central neural network in communication with the driving apparatus, such as the central network 700 described above.

To train or establish the neural network for facilitating driverless driving of a driving apparatus, the driving apparatus may be operated by a human operator for a period of time for collecting traveling or operation data for the training of the neural network. At 805, as the human operator operates the driving apparatus, obstacle information about one or more obstacles that may be present in or may come into a detection zone or a traveling path of the driving apparatus may be received or collected. The detection zone may be similar to the detection zone 110 as discussed above with reference to FIG. 1. The obstacle information may be detected by sensors of the driving apparatus, similar to the sensors 102 of the driving apparatus 100. The detected obstacle information may include one or more of the following obstacle parameters, such as distances of the obstacles from the driving apparatus, angles at which each of the obstacles may be positioned with respect to the driving apparatus, moving directions of the obstacles, moving speeds of the obstacles, shapes and/or sizes of the obstacles, and so on. The detected obstacle information or obstacle parameters may be received by an obstacle analysis component of the driving apparatus, similar to the obstacle analysis component 142 of the driving apparatus 100. In some embodiments, the detected obstacle information or obstacle parameters may be further received by a central neural network, similar to the central neural network 700, that may be configured to communicate with the driving apparatus. The central neural network may be configured to also communicate with other driving apparatuses for collecting obstacle information or obstacle parameters from other driving apparatuses. If obstacle information or obstacle parameters of multiple driving apparatuses may be received, identification of each driving apparatus, such as vehicle identification number, or other unique identifiers, may also be received along with the obstacle information.

At 810, the received obstacle information or obstacle parameters may be processed to facilitate subsequent processing. For example, the obstacle information or obstacle parameters may be time stamped at 810. The received obstacle information or obstacle parameters may also be processed into characteristic values by comparing each obstacle parameter with predetermined range values, similar to how the obstacle analysis component 142 or the obstacle analysis component 708 may process the obstacle parameters into characteristic values. Accordingly, the distance parameters may be processed into distance characteristic values, the angle parameters may be processed into angle characteristic values, the moving direction parameters may be processed into moving direction characteristic values, the moving speed parameters may be processed into moving speed characteristic values, and so on. If the predetermined range values overlap, appropriate degree values may be assigned to the characteristic values. In some embodiments, the processing of the obstacle information may be performed by the obstacle analysis component configured at the driving apparatus. In some embodiments, the processing of the obstacle information may be performed by an obstacle analysis component configured at the central neural network, similar to the obstacle analysis component 708 of the central neural network 700.

At 815, the maneuvering adjustments made by the human operator in order to avoid the obstacles may be received or collected. The driving apparatus may be configured with a maneuvering adjustment collecting component, similar to the maneuvering adjustment collecting component 144 of the driving apparatus 100, for collecting the maneuvering adjustments made by the human operator to the traveling or operation of the driving apparatus. The maneuvering adjustments may include one or more adjustments to the traveling speed of the driving apparatus, one or more adjustments to the traveling direction of the driving apparatus, or any other maneuvering adjustments made by the human operator to the traveling or operation of the driving apparatus.

At 820, the received maneuvering adjustments may be processed. For example, the maneuvering adjustment collecting component of the driving apparatus may time stamp the maneuvering adjustments received. The processing of the maneuvering adjustments may be performed by the maneuvering adjustment collecting component of the driving apparatus, similar to how the maneuvering adjustment collecting component 144 of the driving apparatus 100 may be configured to time stamp the maneuvering adjustments collected.

At 825, the obstacle information, such as the obstacle parameters or characteristic values, of each obstacle may be associated with the maneuvering adjustments made by the human operator in response to his or her observation of the obstacle. In some embodiments, the association of the obstacle information and the maneuvering adjustments may be performed by a neural network training component configured at the driving apparatus, similar to the neural network training component 146 of the driving apparatus 100. In some embodiments, the association of the obstacle information and the maneuvering adjustments may be performed by a neural network training component configured at the central neural network, similar to the neural network training component 706 of the central neural network 700.

As discussed above, in some embodiments, the neural network training component may be configured to associate the obstacle parameters or characteristic values of the obstacles with the appropriate maneuvering adjustments by comparing the time at which each of the obstacles was detected by the sensors of the driving apparatus and the time at which each of the maneuvering adjustments was made by the human operator. For example, one or more of the maneuvering adjustments may be determined to have been made within a first predetermined period of time after detecting an obstacle. Then, the neural network training component may associate the maneuvering adjustments with the obstacle parameters or characteristic values of that obstacle.

As also discussed above, in some embodiments, the maneuvering adjustments may be associated with the obstacle parameters or characteristic values of multiple obstacles if the maneuvering adjustments may have been made to avoid the multiple obstacles. Such association may be made by further comparing the time of each of the obstacles detected. If the neural network training component may determine that each of the multiple obstacles was detected by the sensors of the driving apparatus within a second predetermined period of time from the immediately preceding obstacle detected, then the neural network training component may determine that the maneuvering adjustments associated with each of the multiple obstacles to have been made to avoid the multiple obstacles all together. The neural network training component may group the multiple obstacles together. The neural network training component may further group all the maneuvering adjustments associated with each of the grouped obstacles. That is, the neural network training component may group all the maneuvering adjustments made after the detection of the first obstacle of the multiple obstacles and before the end of the first predetermined period of time from the detection of the last obstacle of the grouped multiple obstacles.

At 830, the obstacle parameters or characteristic values and the associated maneuvering adjustments may be utilized by the neural network training component to train or establish the neural network for facilitating driverless driving. The neural network training component may be further configured to utilize some of the obstacle parameters or characteristic values and the associated maneuvering adjustments to test the neural network being trained.

Once the neural network has been trained, at 835, the trained neural network may be implemented to autonomous driving apparatuses. In some embodiments, the trained neural network may be implemented to the driving apparatuses by programming the trained neural network to the onboard control systems of the driving apparatuses. The trained neural network may be configured to facilitate the autonomous driving of the driving apparatuses or to assist human operators of the driving apparatuses as described below.

During operation of the trained neural network, at 840, obstacle information, such as obstacle parameters as discussed above, may be received or detected by the sensors of the driving apparatus. The sensors may detect one or multiple obstacles, each of which may be detected within a third predetermined period of time from the immediately preceding obstacle detected. The third predetermined period of time may be the same as or different from the second predetermined period of time for determining whether one or more maneuvering adjustments were made by the human operator in response to observation of multiple obstacles.

At 845, the obstacle information or obstacle parameters received at 840 may be processed by the obstacle analysis component onboard the driving apparatus. For example, in some embodiments, the obstacle information or obstacle parameters may be processed into characteristic values as discussed above with reference to 810.

At 850, based on the obstacle parameters or characteristic values of the obstacles detected, the trained neural network may generate one or more maneuvering adjustments for adjusting the traveling or operation of the driving apparatus so as to avoid the obstacles. The generated maneuvering adjustments may include adjusting the traveling speed of the driving apparatus, adjusting the traveling direction of the driving apparatus, and/or other appropriate adjustments to the traveling or operation of the driving apparatus. Because the neural network may be trained based on traveling or operation data involving multiple obstacles, the trained neural network may be able to respond to multiple obstacles detected by the sensors of the driving apparatus. Accordingly, if multiple obstacles may be detected at 840, the trained neural network may generate one or more maneuvering adjustments to avoid all of the multiple obstacles. For example, the sensors may detect a first, second, third, etc. obstacles, each of which may be detected within the third predetermined period of time from the detection of the immediately preceding obstacle detected. The trained neural network may generate one or more maneuvering adjustments based on the detection of all the first, second, third, etc. obstacles detected.

At 855, the trained neural network may output the generated maneuvering adjustments to the appropriate control components of the driving apparatus to adjust the traveling or operation of the driving apparatus, thereby facilitating the driverless driving of the driving apparatus.

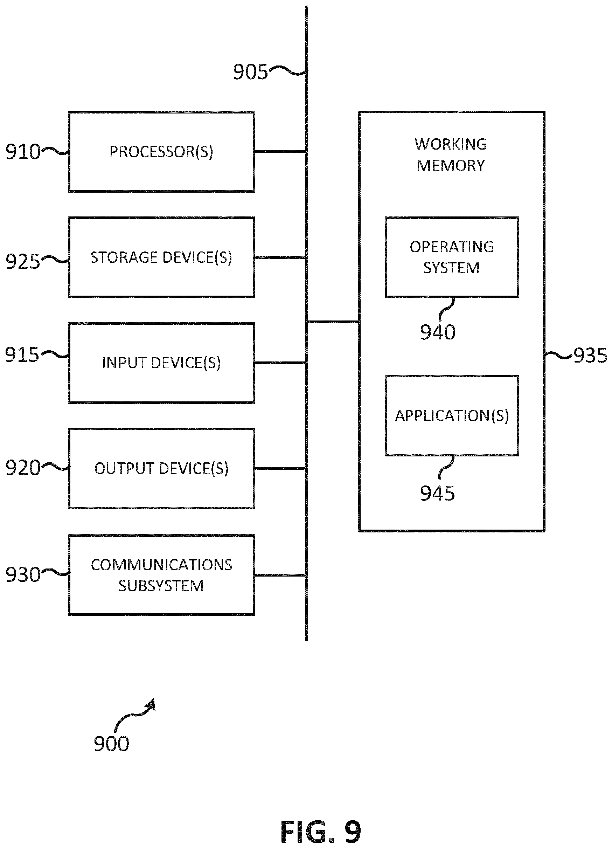

**FIG. 9** illustrates a simplified computing or computer system that may be used implement various embodiments described and illustrated herein. A computer system 900 as illustrated in FIG. 9 may be incorporated into devices such as a portable electronic device, mobile phone, or other device as described herein. FIG. 9 provides a schematic illustration of one embodiment of a computer system 900 that may perform some or all of the steps of the methods provided by various embodiments. It should be noted that FIG. 9 is meant only to provide a generalized illustration of various components, any or all of which may be utilized as appropriate. FIG. 9, therefore, broadly illustrates how individual system elements may be implemented in a relatively separated or relatively more integrated manner.

The computer system 900 is shown including hardware elements that may be electrically coupled via a bus 905, or may otherwise be in communication, as appropriate. The hardware elements may include one or more processors 910, including without limitation one or more general-purpose processors and/or one or more special-purpose processors such as digital signal processing chips, graphics acceleration processors, and/or the like; one or more input devices 915, which may include without limitation a mouse, a keyboard, a camera, and/or the like; and one or more output devices 920, which may include without limitation a display device, a printer, and/or the like.

The computer system 900 may further include and/or be in communication with one or more non-transitory storage devices 925, which may include, without limitation, local and/or network accessible storage, and/or may include, without limitation, a disk drive, a drive array, an optical storage device, a solid-state storage device, such as a random access memory ("RAM"), and/or a read-only memory ("ROM"), which may be programmable, flash-updateable, and/or the like. Such storage devices may be configured to implement any appropriate data storage, including without limitation, various file systems, database structures, and/or the like.

The computer system 900 might also include a communications subsystem 930, which may include without limitation a modem, a network card (wireless or wired), an infrared communication device, a wireless communication device, and/or a chipset such as a Bluetooth™ device, an 802.11 device, a WiFi device, a WiMax device, cellular communication facilities, etc., and/or the like. The communications subsystem 930 may include one or more input and/or output communication interfaces to permit data to be exchanged with a network such as the network described below to name one example, other computer systems, television, and/or any other devices described herein. Depending on the desired functionality and/or other implementation concerns, a portable electronic device or similar device may communicate image and/or other information via the communications subsystem 930. In other embodiments, a portable electronic device, e.g. the first electronic device, may be incorporated into the computer system 900, e.g., an electronic device as an input device 915. In some embodiments, the computer system 900 will further include a working memory 935, which may include a RAM or ROM device, as described above.

The computer system 900 also may include software elements, shown as being currently located within the working memory 935, including an operating system 940, device drivers, executable libraries, and/or other code, such as one or more application programs 945, which may include computer programs provided by various embodiments, and/or may be designed to implement methods, and/or configure systems, provided by other embodiments, as described herein. Merely by way of example, one or more procedures described with respect to the methods discussed above, such as those described in relation to FIG. 9, might be implemented as code and/or instructions executable by a computer and/or a processor within a computer; in an aspect, then, such code and/or instructions may be used to configure and/or adapt a general purpose computer or other device to perform one or more operations in accordance with the described methods.

A set of these instructions and/or code may be stored on a non-transitory computer-readable storage medium, such as the storage device(s) 925 described above. In some cases, the storage medium might be incorporated within a computer system, such as computer system 900. In other embodiments, the storage medium might be separate from a computer system e.g., a removable medium, such as a compact disc, and/or provided in an installation package, such that the storage medium may be used to program, configure, and/or adapt a general purpose computer with the instructions/code stored thereon. These instructions might take the form of executable code, which is executable by the computer system 900 and/or might take the form of source and/or installable code, which, upon compilation and/or installation on the computer system 900 e.g., using any of a variety of generally available compilers, installation programs, compression/decompression utilities, etc., then takes the form of executable code.

It will be apparent to those skilled in the art that substantial variations may be made in accordance with specific requirements. For example, customized hardware might also be used, and/or particular elements might be implemented in hardware, software including portable software, such as applets, etc., or both. Further, connection to other computing devices such as network input/output devices may be employed.

As mentioned above, in one aspect, some embodiments may employ a computer system such as the computer system 900 to perform methods in accordance with various embodiments of the technology. According to a set of embodiments, some or all of the procedures of such methods are performed by the computer system 900 in response to processor 910 executing one or more sequences of one or more instructions, which might be incorporated into the operating system 940 and/or other code, such as an application program 945, contained in the working memory 935. Such instructions may be read into the working memory 935 from another computer-readable medium, such as one or more of the storage device(s) 925. Merely by way of example, execution of the sequences of instructions contained in the working memory 935 might cause the processor(s) 910 to perform one or more procedures of the methods described herein. Additionally or alternatively, portions of the methods described herein may be executed through specialized hardware.

The terms "machine-readable medium" and "computer-readable medium," as used herein, refer to any medium that participates in providing data that causes a machine to operate in a specific fashion. In an embodiment implemented using the computer system 900, various computer-readable media might be involved in providing instructions/code to processor(s) 910 for execution and/or might be used to store and/or carry such instructions/code. In many implementations, a computer-readable medium is a physical and/or tangible storage medium. Such a medium may take the form of a non-volatile media or volatile media. Non-volatile media include, for example, optical and/or magnetic disks, such as the storage device(s) 925. Volatile media include, without limitation, dynamic memory, such as the working memory 935.

Common forms of physical and/or tangible computer-readable media include, for example, a floppy disk, a flexible disk, hard disk, magnetic tape, or any other magnetic medium, a CD-ROM, any other optical medium, punchcards, papertape, any other physical medium with patterns of holes, a RAM, a PROM, EPROM, a FLASH-EPROM, any other memory chip or cartridge, or any other medium from which a computer may read instructions and/or code.

Various forms of computer-readable media may be involved in carrying one or more sequences of one or more instructions to the processor(s) 910 for execution. Merely by way of example, the instructions may initially be carried on a magnetic disk and/or optical disc of a remote computer. A remote computer might load the instructions into its dynamic memory and send the instructions as signals over a transmission medium to be received and/or executed by the computer system 900.

The communications subsystem 930 and/or components thereof generally will receive signals, and the bus 905 then might carry the signals and/or the data, instructions, etc., carried by the signals to the working memory 935, from which the processor(s) 910 retrieves and executes the instructions. The instructions received by the working memory 935 may optionally be stored on a non-transitory storage device 925 either before or after execution by the processor(s) 910.

The methods, systems, and devices discussed above are examples. Various configurations may omit, substitute, or add various procedures or components as appropriate. For instance, in alternative configurations, the methods may be performed in an order different from that described, and/or various stages may be added, omitted, and/or combined. Also, features described with respect to certain configurations may be combined in various other configurations. Different aspects and elements of the configurations may be combined in a similar manner. Also, technology evolves and, thus, many of the elements are examples and do not limit the scope of the disclosure or claims.

Generally, according to embodiments, the angles of objects with respect to the driving apparatus may be determined in relation to a reference line associated with the driving apparatus. For example, the reference line may be the longitudinal axis of the apparatus or the direction of travel of the driving apparatus. The angle of an object may be determined as the angle formed between the reference line and a line joining the object and a predetermined position associated with the driving apparatus. For example, the predetermined position may be located on the vehicle, and may also be located on the reference line. The predetermined position may, for example, be located in the middle of the vehicle.

Specific details are given in the description to provide a thorough understanding of exemplary configurations including implementations. However, configurations may be practiced without these specific details. For example, well-known circuits, processes, algorithms, structures, and techniques have been shown without unnecessary detail in order to avoid obscuring the configurations. This description provides example configurations only, and does not limit the scope, applicability, or configurations of the claims. Rather, the preceding description of the configurations will provide those skilled in the art with an enabling description for implementing described techniques. Various changes may be made in the function and arrangement of elements without departing from the spirit or scope of the disclosure.

Also, configurations may be described as a process which is depicted as a schematic flowchart or block diagram. Although each may describe the operations as a sequential process, many of the operations can be performed in parallel or concurrently. In addition, the order of the operations may be rearranged. A process may have additional steps not included in the figure. Furthermore, examples of the methods may be implemented by hardware, software, firmware, middleware, microcode, hardware description languages, or any combination thereof. When implemented in software, firmware, middleware, or microcode, the program code or code segments to perform the necessary tasks may be stored in a non-transitory computer-readable medium such as a storage medium. Processors may perform the described tasks.

Having described several example configurations, various modifications, alternative constructions, and equivalents may be used without departing from the spirit of the disclosure. For example, the above elements may be components of a larger system, wherein other rules may take precedence over or otherwise modify the application of the technology. Also, a number of steps may be undertaken before, during, or after the above elements are considered. Accordingly, the above description does not bind the scope of the claims.

As used herein and in the appended claims, the singular forms "a", "an", and "the" include plural references unless the context clearly dictates otherwise. Thus, for example, reference to "a user" includes a plurality of such users, and reference to "the processor" includes reference to one or more processors and equivalents thereof known to those skilled in the art, and so forth.

Also, the words "comprise", "comprising", "contains", "containing", "include", "including", and "includes", when used in this specification and in the following claims, are intended to specify the presence of stated features, integers, components, or steps, but they do not preclude the presence or addition of one or more other features, integers, components, steps, acts, or groups.

## Claims

1. A method for facilitating traveling or operation of a driving apparatus, the method being implemented in one or more processors configured to execute programmed components, the method comprising:
receiving a first obstacle parameter of a first obstacle, wherein the first obstacle parameter is detected by one or more sensors equipped on a driving apparatus;
receiving a second obstacle parameter of a second obstacle, wherein the second obstacle parameter is detected by the one or more sensors equipped on the driving apparatus, and wherein the second obstacle parameter is detected by the one or more sensors within a first predetermined period of time from detecting the first obstacle parameter by the one or more sensors;
receiving a first maneuvering adjustment to the operation of the driving apparatus, wherein the first maneuvering adjustment is made after detecting the first obstacle parameter but before an end of a second predetermined period of time starting from detecting the second obstacle parameter;
associating the first maneuvering adjustment with the first obstacle parameter;
associating the first maneuvering adjustment with the second obstacle parameter; and
training a neural network, wherein training the neural network is based at least on the association of the first maneuvering adjustment and the first obstacle parameter or the association of the first maneuvering adjustment and the second obstacle parameter.

2. The method of claim 1, further comprising:
receiving a second maneuvering adjustment to the operation of the driving apparatus, wherein the second maneuvering adjustment is made after detecting the first obstacle parameter but before the end of the second predetermined period of time starting from detecting the second obstacle parameter;
associating the second maneuvering adjustment with the first obstacle parameter;
associating the second maneuvering adjustment with the second obstacle parameter; and
wherein training the neural network is based further on the association of the second maneuvering adjustment with the first obstacle parameter or the association of the second maneuvering adjustment with the second obstacle parameter.

3. The method of claim 2, further comprising:
receiving a third obstacle parameter of a third obstacle, wherein the third obstacle parameter is detected by the one or more sensors equipped on the driving apparatus, and wherein the third obstacle parameter is detected by the one or more sensors within the first predetermined period of time from detecting the second obstacle parameter by the one or more sensors;
associating the first maneuvering adjustment with the third obstacle parameter;
associating the second maneuvering adjustment with the third obstacle parameter; and
wherein training the neural network is based further on the association of the first maneuvering adjustment with the third obstacle parameter or the association of the second maneuvering adjustment with the third obstacle parameter.

4. The method of any preceding claim, further comprising:
receiving a fourth obstacle parameter of a fourth obstacle, wherein the fourth obstacle parameter is detected by the one or more sensors equipped on the driving apparatus;
receiving a fifth obstacle parameter of a fifth obstacle, wherein the fifth obstacle parameter is detected by the one or more sensors equipped on the driving apparatus, and wherein the fifth obstacle parameter is detected by the one or more sensors within the first predetermined period of time from detecting the fourth obstacle parameter by the one or more sensors; and
generating, by the trained neural network, a third maneuvering adjustment to the operation of the driving apparatus, wherein the third maneuvering adjustment is generated by the neural network in response at least to receiving the fourth obstacle parameter or to receiving the fifth obstacle parameter.

5. The method of claim 4, further comprising:
receiving a sixth obstacle parameter of a sixth obstacle, wherein the sixth obstacle parameter is detected by the one or more sensors equipped on the driving apparatus, wherein the sixth obstacle parameter is detected by the one or more sensors within the first predetermined period of time from detecting the fifth obstacle parameter by the one or more sensors;
generating, by the trained neural network, a fourth maneuvering adjustment to the operation of the driving apparatus, wherein the fourth maneuvering adjustment is generated by the neural network in response at least to receiving the fourth obstacle parameter, to receiving the fifth obstacle parameter, or to receiving the sixth obstacle parameter.

6. The method of any preceding claim, wherein training the neural network is performed onboard the driving apparatus; or wherein training the neural network is performed by a central neural network in communication with the driving apparatus over a network.

7. The method of any preceding claim, further comprising:
implementing the trained neural network to an onboard control system of the driving apparatus.

8. A method for facilitating traveling or operation of a driving apparatus, the method being implemented in one or more processors configured to execute programmed components, the method comprising:
determining a first obstacle parameter of a first obstacle, wherein the first obstacle parameter is detected by one or more sensors equipped on a driving apparatus;
determining a second obstacle parameter of a second obstacle, wherein the second obstacle parameter is detected by the one or more sensors equipped on the driving apparatus, and wherein the second obstacle parameter is detected by the one or more sensors within a first predetermined period of time from detecting the first obstacle parameter by the one or more sensors;
determining a first maneuvering adjustment to the operation of the driving apparatus, wherein the first maneuvering adjustment is made after detecting the first obstacle parameter but before an end of a second predetermined period of time starting from detecting the second obstacle parameter;
transmitting, to a neural network, the first obstacle parameter, the second obstacle parameter, and the first maneuvering adjustment for training the neural network.

9. The method of claim 8, further comprising:
associating the first maneuvering adjustment with the first obstacle parameter; and
associating the first maneuvering adjustment with the second obstacle parameter.

10. The method of claim 8 or 9, further comprising:
determining a second maneuvering adjustment to the operation of the driving apparatus, wherein the second maneuvering adjustment is made after detecting the first obstacle parameter but before the end of the second predetermined period of time starting from detecting the second obstacle parameter;
associating the second maneuvering adjustment with the first obstacle parameter;
associating the second maneuvering adjustment with the second obstacle parameter; and
transmitting, to the neural network, the second maneuvering adjustment for training the neural network;
the method further comprising:
determining a third obstacle parameter of a third obstacle, wherein the third obstacle parameter is detected by the one or more sensors equipped on the driving apparatus, and wherein the third obstacle parameter is detected by the one or more sensors within the first predetermined period of time from detecting the second obstacle parameter by the one or more sensors;
associating the first maneuvering adjustment with the third obstacle parameter;
associating the second maneuvering adjustment with the third obstacle parameter; and
transmitting, to the neural network, the third obstacle parameter for training the neural network.

11. The method of any preceding claim wherein:
the first obstacle parameter comprises at least one of a first distance between the first obstacle and the driving apparatus, a first angle of the first obstacle with respect to a traveling direction of the driving apparatus, a first moving speed of the first obstacle, a first moving direction of the first obstacle, or a first size parameter of the first obstacle;
the second obstacle parameter comprises at least one of a second distance between the second obstacle and the driving apparatus, a second angle of the second obstacle with respect to the traveling direction of the driving apparatus, a second moving speed of the second obstacle, a second moving direction of the second obstacle, or a second size parameter of the second obstacle; and
at least the first angle and the second angle are different.

12. The method of any preceding claim, wherein the first maneuvering adjustment comprises at least one of a direction maneuvering adjustment for adjusting a traveling direction of the driving apparatus or a speed maneuvering adjustment for adjusting a traveling speed of the driving apparatus.

13. The method of any of claims 8 to 12, further comprising:
determining a fourth obstacle parameter of a fourth obstacle, wherein the fourth obstacle parameter is detected by the one or more sensors equipped on the driving apparatus;
determining a fifth obstacle parameter of a fifth obstacle, wherein the fifth obstacle parameter is detected by the one or more sensors equipped on the driving apparatus, and wherein the fifth obstacle parameter is detected by the one or more sensors within the first predetermined period of time from detecting the fourth obstacle parameter by the one or more sensors;
transmitting, to the neural network, the fourth obstacle parameter, the fifth obstacle parameter; and
receiving, from the neural network, a third maneuvering adjustment to the operation of the driving apparatus, wherein the third maneuvering adjustment is generated by the neural network in response at least to receiving the fourth obstacle parameter or to receiving the fifth obstacle parameter;
the method further comprising:
determining a sixth obstacle parameter of a sixth obstacle, wherein the sixth obstacle parameter is detected by the one or more sensors equipped on the driving apparatus, and wherein the sixth obstacle parameter is detected by the one or more sensors within the first predetermined period of time from detecting the fifth obstacle parameter by the one or more sensors;
transmitting, to the neural network, the sixth obstacle parameter; and
receiving, from the neural network, a fourth maneuvering adjustment to the operation of the driving apparatus, wherein the fourth maneuvering adjustment is generated by the neural network in response at least to receiving the fourth obstacle parameter, to receiving the fifth obstacle parameter, or to receiving the sixth obstacle parameter.

14. The method of any of claims 8 to 13, further comprising:
processing the first obstacle parameter into a characteristic value by comparing the first obstacle parameter with a plurality of predetermined range values.

15. The method of any of claims 8 to 13, further comprising:
processing the first obstacle parameter into a plurality of characteristic values by comparing the first obstacle parameter with a plurality of predetermined range values; and
assigning each of the plurality of the characteristic values a degree value.
